(19)

Europäisches
Patentamt
European
Patent Office
Office européen
des brevets

(11)  **EP 3 851 552 A1**

(12)  **EUROPEAN PATENT APPLICATION**
published in accordance with Art. 153(4) EPC

(43) Date of publication:
**21.07.2021  Bulletin 2021/29**

(21) Application number: **19875353.5**

(22) Date of filing: **08.10.2019**

(51) Int Cl.:
*C22C 38/18* (2006.01)    *C22C 38/24* (2006.01)
*C22C 38/38* (2006.01)    *C22C 38/02* (2006.01)
*C22C 38/06* (2006.01)    *C22C 38/00* (2006.01)
*C22C 38/04* (2006.01)    *C21D 9/46* (2006.01)
*C21D 8/02* (2006.01)

(86) International application number:
**PCT/KR2019/013233**

(87) International publication number:
**WO 2020/085687 (30.04.2020 Gazette 2020/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **23.10.2018  KR 20180126852**

(71) Applicant: **POSCO**
**Gyeongsangbuk-do 37859 (KR)**

(72) Inventors:
• **PARK, Soo-Ho**
**Pohang-si Gyeongsangbuk-do 37680 (KR)**
• **PARK, Jae-Seok**
**Pohang-si Gyeongsangbuk-do 37669 (KR)**
• **MIN, Hyun Woong**
**Yongin-si Gyeonggi-do 16943 (KR)**

(74) Representative: **Potter Clarkson**
**The Belgrave Centre**
**Talbot Street**
**Nottingham NG1 5GG (GB)**

(54)  **HIGH-STRENGTH FERRITIC STAINLESS STEEL FOR CLAMP AND METHOD FOR MANUFACTURING SAME**

(57)    Disclosed are high-strength ferritic stainless steel applicable to clamps of automobiles or general hoses, and a manufacturing method thereof.

In accordance with an aspect of the present disclosure, a high-strength ferritic stainless steel for clamp includes, in percent (%) by weight of the entire composition, C: 0.04 to 0.1%, Si: 0.2 to 0.6%, Mn: 0.01 to 1.5%, Cr: 14.0 to 18.0%, Al: 0.005 to 0.2%, V: 0.005 to 0.2%, N: 0.02 to 0.1%, the remainder of iron (Fe) and other inevitable impurities, and satisfies following formulas (1) and (2), and the number of precipitates with an average diameter of $0.5\,\mu$m or less is $2.5\times10^6$ pieces/mm$^2$ or more.

$$(1) \qquad 0.35\% \ \leq \ Si+Al+V \ \leq \ 0.6\% \qquad (1)$$

$$(2) \qquad 0.09\% \ \leq \ C+N \ \leq \ 0.12\% \qquad (2)$$

EP 3 851 552 A1

【FIG. 1】

**Description**

[Technical Field]

The present disclosure relates to a high-strength ferritic stainless steel, and more particularly, to a high-strength ferritic stainless steel applicable to clamps of automobiles or general hoses, and a manufacturing method thereof.

[Background Art]

A ferritic stainless steel is widely used in heat-resistant appliances, sink tops, exterior materials, home appliances, and electronic parts due to its low cost, low thermal expansion coefficient, and good surface gloss, moldability and oxidation resistance compared to austenitic stainless steel. In the case of ferritic stainless steel cold rolled sheet, it is manufactured through a hot rolling process, an annealing pickling process that removes the surface scale of the hot-rolled coil and removes the internal stress of the material, and a cold rolling and annealing process.

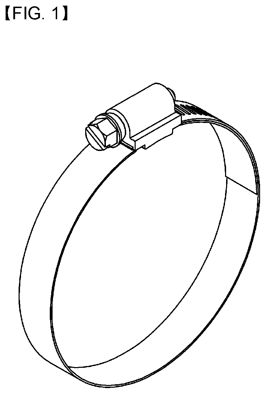

FIG. 1 shows a clamp for an automobile or a general hose. The clamp needs high strength because it serves to fasten plastic hoses or pipes, and excellent ductility is also required at the same time because there should be no cracks during bending. In addition, since corrosion resistance is required as it is used not only indoors but also outdoors of automobiles, the demand for stainless steel for clamps is increasing recently.

Utility ferrite such as 410UF, which is generally manufactured, has a Cr content of 12%, which is inferior in corrosion resistance, and has low elongation, so it cannot be used for clamping. Therefore, it is attempted to use 16%Cr 430 series (general 430, 430LX) having a relatively high Cr content, but it is difficult to satisfy the market demand due to low tensile strength. In order to satisfy a market requirement of the tensile strength (TS) of 510 MPa or more, yield strength (YS) of 320 MPa or more, and elongation (EI) of 20% or more in all three directions of 0 ° , 45 ° and 90 ° , component system development and optimization of the manufacturing process must be preceded.

For major quality issues in ferritic stainless steel represented by STS430, there are a number of prior patented technologies related to improving ridging, orange peel, and in-plane anisotropy during molding. However, there is hardly any research on optimizing manufacturing technology and reviewing component systems that satisfy high strength so that they can be applied to clamp applications of automobiles or general hoses.

[Disclosure]

[Technical Problem]

The present disclosure is intended to provide a ferritic stainless steel capable of implementing high strength by controlling the content of Si, Al, V, C, N, etc. in the component system, the size of the precipitate and the amount of precipitation by hot rolling non-annealing, and a manufacturing method thereof.

[Technical Solution]

In accordance with an aspect of the present disclosure, a high-strength ferritic stainless steel for clamp includes, in percent (%) by weight of the entire composition, C: 0.04 to 0.1%, Si: 0.2 to 0.6%, Mn: 0.01 to 1.5%, Cr: 14.0 to 18.0%, Al: 0.005 to 0.2%, V: 0.005 to 0.2%, N: 0.02 to 0.1%, the remainder of iron (Fe) and other inevitable impurities, and satisfies following formulas (1) and (2), and the number of precipitates with an average diameter of $0.5\mu m$ or less is $2.5 \times 10^6$ pieces/mm$^2$ or more.

$$(1) \quad 0.35\% \ \leq \ Si{+}Al{+}V \ \leq \ 0.6\%$$

$$(2) \quad 0.09\% \ \leq \ C{+}N \ \leq \ 0.12\%$$

Here, Si, Al, V, C, and N mean the content (% by weight) of each element.

The ferritic stainless steel may further include: any one or more selected from the group consisting of Ni: 0.001 to 0.5%, P: 0.05% or less, and S: 0.005% or less.

The precipitate may include a Cr carbonitride.

The ferritic stainless steel may have a yield strength of 320 MPa or more, tensile strength of 510 MPa or more, and elongation of 20% or more.

In accordance with an aspect of the present disclosure, a manufacturing method of a high-strength ferritic stainless steel for clamp includes: hot rolling a slab by reheating at 1,000 to 1,200°C, the slab comprises, in percent (%) by weight of the entire composition, C: 0.04 to 0.1%, Si: 0.2 to 0.6%, Mn: 0.01 to 1.5%, Cr: 14.0 to 18.0%, Al: 0.005 to 0.2%, V: 0.005 to 0.2%, N: 0.02 to 0.1%, the remainder of iron (Fe) and other inevitable impurities, and satisfies following formulas (1) and (2); winding the hot-rolled steel sheet at 700°C or more; cold rolling the wound hot-rolled steel sheet at a reduction ratio of 60% or more; and performing annealing heat treatment on the cold-rolled steel sheet for 10 minutes or less at 550 to 950°C, and the method is characterized in that an annealing heat treatment of the wound hot-rolled steel sheet is omitted.

$$(1) \qquad 0.35\% \leq Si+Al+V \leq 0.6\%$$

$$(2) \qquad 0.09\% \leq C+N \leq 0.12\%$$

The cold-rolled steel sheet subjected to the annealing heat treatment may have $2.5 \times 10^6$ pieces/mm$^2$ or more precipitates with an average diameter of 0.5 $\mu$m or less.

The precipitate may include a Cr carbonitride.

The cold-rolled steel sheet subjected to the annealing heat treatment may have a yield strength of 320 MPa or more, tensile strength of 510 MPa or more, and elongation of 20% or more.

[Advantageous Effects]

The high-strength ferritic stainless steel according to an embodiment of the present disclosure satisfies a yield strength of 320 MPa or more, a tensile strength of 510 MPa or more, and an elongation of 20% or more, and thus can be used as a clamp for automobiles.

[Description of Drawings]

FIG. 1 is a diagram showing a shape of a general clamp.
FIG. 2 is a graph showing the yield strength (YS) according to the value of formula (1) of the present disclosure.
FIG. 3 is a graph showing the tensile strength (TS) according to the value of formula (2) of the present disclosure.
FIG. 4 is a photograph of a precipitate of an inventive example according to an embodiment of the present disclosure and a precipitate of a comparative example taken with a scanning electron microscope (SEM) and a transmission electron microscope (TEM).

[Best Mode]

In accordance with an aspect of the present disclosure, a high-strength ferritic stainless steel for clamp includes, in percent (%) by weight of the entire composition, C: 0.04 to 0.1%, Si: 0.2 to 0.6%, Mn: 0.01 to 1.5%, Cr: 14.0 to 18.0%, Al: 0.005 to 0.2%, V: 0.005 to 0.2%, N: 0.02 to 0.1%, the remainder of iron (Fe) and other inevitable impurities, and satisfies following formulas (1) and (2), and the number of precipitates with an average diameter of $0.5\mu$m or less is $2.5 \times 10^6$ pieces/mm$^2$ or more.

$$(1) \qquad 0.35\% \leq Si+Al+V \leq 0.6\%$$

$$(2) \qquad 0.09\% \leq C+N \leq 0.12\%$$

Here, Si, Al, V, C, and N mean the content (% by weight) of each element.

[Modes of the Invention]

Hereinafter, the embodiments of the present disclosure will be described in detail with reference to the accompanying drawings. The following embodiments are provided to transfer the technical concepts of the present disclosure to one of ordinary skill in the art. However, the present disclosure is not limited to these embodiments, and may be embodied in another form. In the drawings, parts that are irrelevant to the descriptions may be not shown in order to clarify the present disclosure, and also, for easy understanding, the sizes of components are more or less exaggeratedly shown.

In accordance with an aspect of the present disclosure, a high-strength ferritic stainless steel for clamp includes, in percent (%) by weight of the entire composition, C: 0.04 to 0.1%, Si: 0.2 to 0.6%, Mn: 0.01 to 1.5%, Cr: 14.0 to 18.0%, Al: 0.005 to 0.2%, V: 0.005 to 0.2%, N: 0.02 to 0.1%, the remainder of iron (Fe) and other inevitable impurities.

Hereinafter, the reason for limiting the numerical value of the alloy element content of the present disclosure will be described. Hereinafter, unless otherwise specified, the unit is % by weight.

The content of C is 0.04 to 0.1%.

In the steel, C is an impurity that is inevitably included in ferritic stainless steel, and it is precipitated as $(Cr,Fe)_{23}C_6$, $(Cr,Fe)_7C_3$ carbides to improve strength, so it is contained 0.04% or more. However, it is limited to 0.1% or less because elongation is reduced and the workability of the product is significantly reduced when excessively included in the base material.

The content of Si is 0.2 to 0.6%.

Si is an inevitable impurity contained in steel, but is an element added as a deoxidizer during steel making, and is a ferrite stabilizing element. If it is contained in a large amount in steel, it causes hardening of the material and lowers the ductility, so it is usually managed at 0.4% or less. However, in order to manufacture a high-strength ferritic stainless steel for clamp, it is necessary to use Si optimally. Accordingly, in the present disclosure, the Si content is controlled to 0.2 to 0.6% to improve the tensile strength and yield strength through a solid solution strengthening effect, and the Si content is limited to 0.6% or less in order to maintain elongation.

The content of Mn is 0.01 to 1.5%.

Mn is an impurity that is inevitably included in steel, but because it is an austenite stabilizing element, it plays a role of suppressing roping and ridging. However, when included in a large amount, manganese-based fumes are generated during welding, and it causes MnS phase precipitation and lowers elongation, so the content is limited to 0.01 to 1.5%.

The content of Cr is 14.0 to 18.0%.

Cr is an alloying element added to improve the corrosion resistance of steel, and its critical content is 12%. However, ferritic stainless steel containing C and N may cause intergranular corrosion. Therefore, in consideration of the possibility of intergranular corrosion and the increase in manufacturing cost, the content is limited to 14.0 to 18.0%.

The content of Al is 0.005 to 0.2%.

Al is a strong deoxidizer and serves to lower the content of oxygen in molten steel, and in the present disclosure, it is added by 0.005% or more. However, if the content is excessive, a sliver defect of the cold-rolled strip occurs due to an increase in non-metallic inclusions, and at the same time, the weldability deteriorates, so it is limited to 0.2% or less, and more preferably, it can be limited to 0.1% or less.

The content of V is 0.005 to 0.2%.

V plays a role of forming carbonitride by fixing C and N, and is an effective element in suppressing the growth of carbonitride and minimizing it. In the present disclosure, 0.005% or more is added, and more preferably 0.03% or more is added. However, if the content is excessive, the manufacturing cost increases rapidly, and may be limited to 0.2% or less, and more preferably 0.1% or less.

The content of N is 0.02 to 0.1%.

In the steel, N is present as an impurity element equal to C, and it is precipitated as $Cr_2N$ nitride in the manufacturing process and plays a role of improving the strength, so 0.02% or more is added. However, since the addition of a large amount not only impairs workability, but also causes stretcher strain in the cold-rolled product, the content is limited to 0.1% or less.

Further, according to an embodiment of the present disclosure, any one or more selected from the group consisting of Ni: 0.001 to 0.5%, P: 0.05% or less, and S: 0.005% or less may be further included.

The content of Ni is 0.001 to 0.5%. Ni, along with Cu and Mn, is an austenite stabilizing element, has an effect of suppressing roping and ridging by increasing the austenite fraction, and improves corrosion resistance by adding a small amount. However, when a large amount is added, the content is limited to the above-described range due to deterioration in workability and an increase in manufacturing cost.

The content of P is 0.05% or less. P is an inevitable impurity contained in the steel, and since it causes intergranular corrosion during pickling or impairs hot workability, its content is adjusted within the above-described range.

The content of S is 0.005% or less. S is an inevitable impurity contained in the steel and is segregated at grain boundaries to impair hot workability, so its content is limited to the above range.

Excluding the above alloying elements, the rest of stainless steel is made of Fe and other inevitable impurities.

In addition, it satisfies the following formulas (1) and (2) at the same time as the above component composition.

$$(1)\ 0.35\% \leq Si+Al+V \leq 0.6\%$$

$$(2)\ 0.09\% \leq C+N \leq 0.12\%$$

In the present disclosure, in order to realize high strength, the yield strength (YS) is increased due to the solid solution strengthening effect according to the increase in the content of Si, Al, and V, which are substituted elements, so that it can exhibit 320 MPa or more. When the Si+Al+V value is less than 0.35%, it is difficult to achieve the desired yield strength, and if it exceeds 0.6%, the elongation decreases.

In addition, by increasing the amount of Cr carbonitride precipitated by increasing the C+N content, and by omitting the hot-rolling annealing heat treatment, the amount of work hardening is increased through the precipitate refinement effect, thereby achieving a tensile strength (TS) of 510 MPa or more. When the C+N value is less than 0.09%, it is difficult to achieve the desired tensile strength, and if it exceeds 0.12%, the elongation decreases.

The microstructure of the present disclosure according to the above-described alloy element control may include $2.5 \times 10^6$ pieces/mm$^2$ or more precipitates with an average diameter of 0.5 $\mu$m or less. The precipitate may be $(Cr,Fe)_{23}C_6$, $(Cr,Fe)_7C_3$ carbide or $Cr_2N$ nitride, that is, Cr-carbonitride according to an increase in C+N content. By precipitating a large amount of fine precipitates of 0.5 $\mu$m or less, it is possible to increase the amount of work hardening during tensioning.

However, for the precipitation of Cr-carbonitride, it is required to omit the hot rolling annealing heat treatment in addition to the alloy element control.

In accordance with an aspect of the present disclosure, a manufacturing method of a high-strength ferritic stainless steel for clamp includes: hot rolling a slab by reheating at 1,000 to 1,200°C, the slab comprises, in percent (%) by weight of the entire composition, C: 0.04 to 0.1%, Si: 0.2 to 0.6%, Mn: 0.01 to 1.5%, Cr: 14.0 to 18.0%, Al: 0.005 to 0.2%, V: 0.005 to 0.2%, N: 0.02 to 0.1%, the remainder of iron (Fe) and other inevitable impurities, and satisfies following formulas (1) and (2); winding the hot-rolled steel sheet at 700°C or more; cold rolling the wound hot-rolled steel sheet at a reduction ratio of 60% or more; and performing annealing heat treatment on the cold-rolled steel sheet for 10 minutes or less at 550 to 950°C.

The hot rolling finishing temperature is preferably 800°C or more. A fine precipitate is formed in the state of a hot-rolled coil through a finish rolling temperature of 800°C or more and winding at 700°C or more, and then the hot rolling annealing heat treatment is omitted to prevent coarsening of the precipitate.

In general, ferritic stainless steel used for clamps performs batch annealing furnace (BAF) as a hot-rolled annealing heat treatment after hot-rolling, and in the present disclosure, hot-rolled annealing heat treatment is omitted. When performing BAF, the fine precipitates precipitated in the hot-rolled coil become coarse and the total number is reduced, making it difficult to secure high strength.

Hereinafter, it will be described in more detail through a preferred embodiment of the present disclosure.

<u>Example</u>

The ferritic stainless steel of the component system in which C, N, Si, Al and V of Table 1 were controlled was prepared as a slab by Lab vacuum melting. The slab was reheated at 1,000 to 1,200°C, and then rolled at a finish rolling temperature of 800°C or more by a rough rolling mill and a continuous finish rolling mill to prepare a hot-rolled sheet.

[Table 1]

| Steel grade | Alloy component (% by weight) | | | | | | | |
|---|---|---|---|---|---|---|---|---|
| | C | Si | Mn | Cr | Al | V | N | |
| A | 0.0690 | 0.35 | 0.50 | 16.20 | 0.043 | 0.06 | 0.0360 | Inventive Example 1 |
| B | 0.0631 | 0.30 | 0.48 | 16.29 | 0.083 | 0.03 | 0.0329 | Inventive Example 2 |
| C | 0.0680 | 0.14 | 0.49 | 16.17 | 0.033 | 0.01 | 0.0360 | Comparative Example 1 |
| D | 0.0610 | 0.12 | 0.46 | 16.15 | 0.031 | 0.02 | 0.0310 | Comparative Example 2 |
| E | 0.0689 | 0.14 | 0.46 | 16.16 | 0.033 | 0.01 | 0.0261 | Comparative Example 3 |
| F | 0.0631 | 0.20 | 0.48 | 16.25 | 0.081 | 0.01 | 0.0229 | Comparative Example 4 |
| G | 0.0631 | 0.20 | 0.48 | 16.23 | 0.081 | 0.02 | 0.0229 | Comparative Example 5 |
| H | 0.0631 | 0.30 | 0.47 | 16.29 | 0.083 | 0.03 | 0.0329 | Comparative Example 6 |

(continued)

| Steel grade | Alloy component (% by weight) | | | | | | | |
|---|---|---|---|---|---|---|---|---|
| | C | Si | Mn | Cr | Al | V | N | |
| I | 0.0590 | 0.12 | 0.47 | 16.14 | 0.078 | 0.01 | 0.0215 | Comparative Example 7 |

Table 2 below shows the values of formulas (1) and (2) defined as Si+Al+V and C+N for the steel having the alloy component of Table 1, and the hot-rolled annealing conditions and the number of precipitates of the cold-rolled annealing material were shown. In addition, the yield strength (YS), tensile strength (TS) and elongation (EL) obtained by performing a tensile test at room temperature at a crosshead speed of 20 mm/min in the direction of 0° from the rolling direction on the plate surface of the cold-rolled annealed material were shown .

[Table 2]

| | Steel grade | Formula (1) (wt%) | Formula (2) (wt%) | Number of precipitates of $0.5 \mu m$ or less ($10^6$ pieces/mm$^2$) | Hot rolling annealing | YS (MPa) | TS (MPa) | EL (%) |
|---|---|---|---|---|---|---|---|---|
| Inventive Example 1 | A | 0.453 | 0.105 | 3.6 | omission | 335.0 | 568.0 | 25.0 |
| Inventive Example 2 | B | 0.414 | 0.096 | 3.2 | omission | 321.2 | 533.9 | 24.3 |
| Comparative Example 1 | C | 0.183 | 0.104 | 3.0 | omission | 303.0 | 546.0 | 23.0 |
| Comparative Example 2 | D | 0.171 | 0.092 | 2.8 | omission | 304.0 | 538.0 | 25.0 |
| Comparative Example 3 | E | 0.183 | 0.095 | 2.7 | omission | 297.0 | 513.0 | 27.0 |
| Comparative Example 4 | F | 0.292 | 0.086 | 2.6 | omission | 307.7 | 509.2 | 24.2 |
| Comparative Example 5 | G | 0.312 | 0.086 | 2.4 | omission | 317.8 | 504.8 | 25.0 |
| Comparative Example 6 | H | 0.414 | 0.096 | 0.2 | BAF | 304.5 | 494.1 | 28.0 |
| Comparative Example 7 | I | 0.208 | 0.081 | 0.2 | BAF | 277.9 | 486.1 | 30.1 |

Inventive Examples 1 and 2

A and B steel grades are vacuum-melted by controlling C, N, Si, Al and V of ferritic stainless steel. After reheating the above steel in the temperature range of 1,000~1,200°C, a hot-rolled sheet was manufactured by rolling at a finishing temperature of 800°C or more by a rough rolling mill and a continuous finishing rolling mill. After that, it was pickled without hot rolling annealing, followed by cold rolling and cold rolling annealing.

As the A and B steel grades satisfy Si+Al+V ≥ 0.35%, it can be seen that the yield strength (YS) ≥ 320 MPa is satisfied. In addition, it can be seen that the A and B steel grades satisfy the tensile strength (TS) ≥ 510 MPa as C+N ≥ 0.09% is satisfied.

Comparative Examples 1 to 3

C to E steel grades have a C+N value of 0.09% or more, which satisfies the formula (1) of the present disclosure, but it was confirmed that the Si+Al+V value was 0.35% or less, and the yield strength (YS) value was as low as 300 MPa.

Comparative Examples 4 and 5

F and G steels have a Si+Al+V value of 0.35% or less and a C+N value of 0.09% or less, it can be seen that neither yield strength (YS) nor tensile strength (TS) satisfies the target strength level of the present disclosure.

Comparative Examples 6 and 7

H steel grade satisfies the Si+Al+V value of 0.35% or more and the C+N value of 0.09% or more, but it can be seen that the yield strength (YS) ≥ 320 MPa and tensile strength (TS) ≥ 510 MPa were not satisfied by performing hot rolled BAF.

In addition, I steel grades did not satisfy the Si+Al+V value of 0.355 or more and the C+N value of 0.09% or more, and the yield strength (YS) was reduced to 280 MPa or less due to hot-rolled BAF. In addition, the tensile strength (TS) was also low, 490 MPa or less, so that the target strength of the present disclosure was not satisfied.

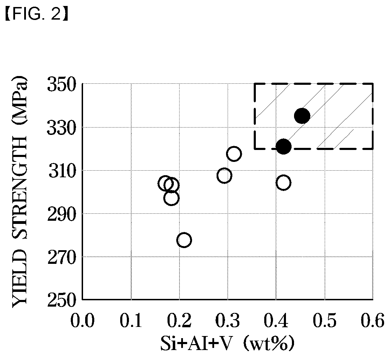

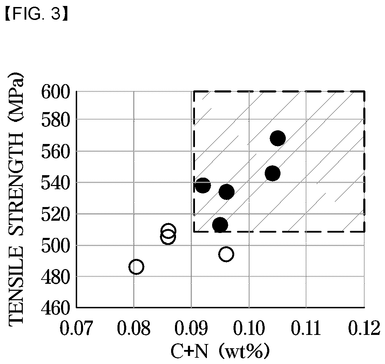

FIG. 2 is a graph showing the yield strength (YS) according to the value of formula (1) of the present disclosure. FIG. 3 is a graph showing the tensile strength (TS) according to the value of formula (2) of the present disclosure.

Referring to FIGS. 2 and 3, in order to realize high strength in the present disclosure, by controlling the value of the formula (1) defined as the sum of the substitutional elements Si+Al+V to 0.35% or more, it was possible to achieve a yield strength of 320 MPa or more by increasing the yield strength due to the solid solution strengthening effect of the base material. In addition, by controlling the value of the formula (2) defined as C+N to 0.09% or more, it was possible to achieve a tensile strength of 510 MPa or more by increasing the amount of work hardening due to the effect of refinement of the precipitate by omitting the hot rolling annealing process along with the increase of Cr-carbonitride precipitation.

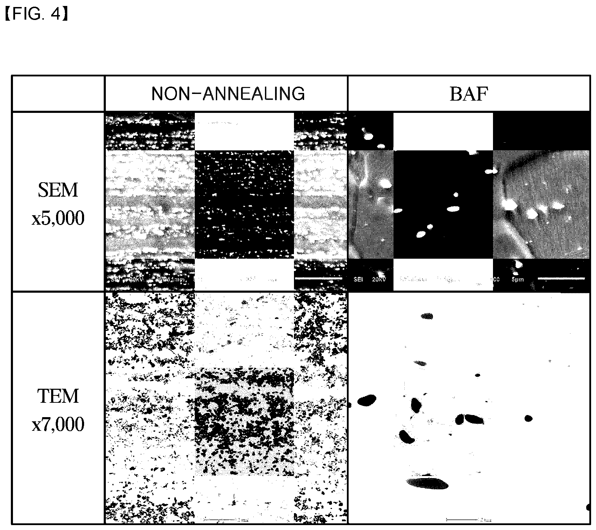

FIG. 4 is a photograph of a precipitate of an inventive example according to an embodiment of the present disclosure and a precipitate of a comparative example taken with a scanning electron microscope (SEM) and a transmission electron microscope (TEM). The non-annealing column is a photograph of steel grade A of Inventive Example 1, and the BAF column is a photograph of steel grade I of Comparative Example 7.

In the case of steel grade A of Inventive Example 1, it can be seen that a large amount of precipitates having an average diameter of $0.5\,\mu$m or less were formed. On the other hand, in the case of the steel grade I of Comparative Example 7, it was confirmed that a precipitate having a size of 0.5 to 2.0 $\mu$m was formed. In other words, it can be seen that the purpose of the present disclosure can be achieved only when the alloy component control and hot rolled non-annealing are satisfied.

As described above, although exemplary embodiments of the present disclosure have been described, the present disclosure is not limited thereto. And, a person of ordinary skill in the art will appreciate that various changes and modifications can be made without departing from the concept and scope of the following claims.

[Industrial Applicability]

The high-strength ferritic stainless steel according to the present disclosure satisfies a yield strength of 320 MPa or more, a tensile strength of 510 MPa or more, and an elongation of 20% or more and can be used as a clamp for automobiles.

**Claims**

1. A high-strength ferritic stainless steel for clamp, the ferritic stainless steel comprising, in percent (%) by weight of the entire composition, C: 0.04 to 0.1%, Si: 0.2 to 0.6%, Mn: 0.01 to 1.5%, Cr: 14.0 to 18.0%, Al: 0.005 to 0.2%, V: 0.005 to 0.2%, N: 0.02 to 0.1%, the remainder of iron (Fe) and other inevitable impurities, and satisfying following formulas (1) and (2), and

   the number of precipitates with an average diameter of $0.5\,\mu$m or less is $2.5 \times 10^6$ pieces/mm$^2$ or more.

$$(1) \quad 0.35\% \leq Si+Al+V \leq 0.6\%$$

$$(2) \quad 0.09\% \leq C+N \leq 0.12\%$$

(Here, Si, Al, V, C, and N mean the content (% by weight) of each element)

2. The ferritic stainless steel according to claim 1, further comprising:

   any one or more selected from a group consisting of Ni: 0.001 to 0.5%, P: 0.05% or less, and S: 0.005% or less.

3. The ferritic stainless steel according to claim 1, wherein the precipitate comprises a Cr carbonitride.

4. The ferritic stainless steel according to claim 1, wherein the ferritic stainless steel has a yield strength of 320 MPa or more, a tensile strength of 510 MPa or more, and an elongation of 20% or more.

5. A manufacturing method of a high-strength ferritic stainless steel for clamp, the method comprising:

   hot rolling a slab by reheating at 1,000 to 1,200°C, the slab comprises, in percent (%) by weight of the entire composition, C: 0.04 to 0.1%, Si: 0.2 to 0.6%, Mn: 0.01 to 1.5%, Cr: 14.0 to 18.0%, Al: 0.005 to 0.2%, V: 0.005 to 0.2%, N: 0.02 to 0.1%, the remainder of iron (Fe) and other inevitable impurities, and satisfies following formulas (1) and (2);
   winding the hot-rolled steel sheet at 700°C or more;
   cold rolling the wound hot-rolled steel sheet at a reduction ratio of 60% or more; and
   performing annealing heat treatment on the cold-rolled steel sheet for 10 minutes or less at 550 to 950°C, and the method is **characterized in that** an annealing heat treatment of the wound hot-rolled steel sheet is omitted.

$$(1) \quad 0.35\% \leq Si+Al+V \leq 0.6\%$$

$$(2) \quad 0.09\% \leq C+N \leq 0.12\%$$

   (Here, Si, Al, V, C, and N mean the content (% by weight) of each element)

6. The manufacturing method according to claim 5, wherein the cold-rolled steel sheet subjected to the annealing heat treatment has $2.5 \times 10^6$ pieces/mm$^2$ or more precipitates with an average diameter of 0.5 $\mu$m or less.

7. The manufacturing method according to claim 6, wherein the precipitate comprises a Cr carbonitride.

8. The manufacturing method according to claim 5, wherein the cold-rolled steel sheet subjected to the annealing heat treatment has a yield strength of 320 MPa or more, tensile strength of 510 MPa or more, and elongation of 20% or more.

EP 3 851 552 A1

【FIG. 1】

10

【FIG. 2】

【FIG. 3】

【FIG. 4】

| | NON-ANNEALING | BAF |
|---|---|---|
| SEM x5,000 | | |
| TEM x7,000 | | |

| INTERNATIONAL SEARCH REPORT | International application No. |
| --- | --- |
| | **PCT/KR2019/013233** |

**A. CLASSIFICATION OF SUBJECT MATTER**

*C22C 38/18(2006.01)i, C22C 38/24(2006.01)i, C22C 38/38(2006.01)i, C22C 38/02(2006.01)i, C22C 38/06(2006.01)i, C22C 38/00(2006.01)i, C22C 38/04(2006.01)i, C21D 9/46(2006.01)i, C21D 8/02(2006.01)i*

According to International Patent Classification (IPC) or to both national classification and IPC

**B. FIELDS SEARCHED**

Minimum documentation searched (classification system followed by classification symbols)

C22C 38/18; C21D 8/02; C21D 9/46; C22C 38/00; C22C 38/54; C22C 38/24; C22C 38/38; C22C 38/02; C22C 38/06; C22C 38/04

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: stainless steel, ferrite, non-annealing, precipitate, carbonitride, high strength

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2007-119848 A (JFE STEEL K.K.) 17 May 2007<br>See paragraphs [0023], [0026], [0029]-[0032], [0039] and claims 1-3. | 1-8 |
| Y | JP 2005-298854 A (NIPPON STEEL & SUMIKIN STAINLESS STEEL CORP.)<br>27 October 2005<br>See paragraph [0033] and claims 1-2. | 1-8 |
| A | JP 11-092872 A (NIPPON STEEL CORP.) 06 April 1999<br>See paragraph [0012] and claim 1. | 1-8 |
| A | KR 10-2017-0041240 A (JFE STEEL CORPORATION) 14 April 2017<br>See claims 1-3. | 1-8 |
| A | WO 2018-043285 A1 (NIPPON STEEL & SUMITOMO METAL CORPORATION)<br>08 March 2018<br>See claims 1-3. | 1-8 |

☐ Further documents are listed in the continuation of Box C.   ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 FEBRUARY 2020 (07.02.2020) | **10 FEBRUARY 2020 (10.02.2020)** |

| Name and mailing address of the ISA/KR | Authorized officer |
| --- | --- |
| Korean Intellectual Property Office<br>Government Complex Daejeon Building 4, 189, Cheongsa-ro, Seo-gu,<br>Daejeon, 35208, Republic of Korea<br>Facsimile No. +82-42-481-8578 | Telephone No. |

Form PCT/ISA/210 (second sheet) (January 2015)

**EP 3 851 552 A1**

**INTERNATIONAL SEARCH REPORT**
Information on patent family members

International application No.

**PCT/KR2019/013233**

| Patent document cited in search report | Publication date | Patent family member | Publication date |
|---|---|---|---|
| JP 2007-119848 A | 17/05/2007 | JP 4682806 B2 | 11/05/2011 |
| JP 2005-298854 A | 27/10/2005 | CN 100351415 C | 28/11/2007 |
| | | CN 1788102 A | 14/06/2006 |
| | | EP 1734143 A1 | 20/12/2006 |
| | | EP 1734143 B1 | 09/01/2013 |
| | | JP 4519505 B2 | 04/08/2010 |
| | | KR 10-0727497 B1 | 13/06/2007 |
| | | KR 10-2006-0007441 A | 24/01/2006 |
| | | US 2006-0225820 A1 | 12/10/2006 |
| | | US 2009-0000703 A1 | 01/01/2009 |
| | | US 8048239 B2 | 01/11/2011 |
| | | WO 2005-098067 A1 | 20/10/2005 |
| JP 11-092872 A | 06/04/1999 | JP 3904683 B2 | 11/04/2007 |
| KR 10-2017-0041240 A | 14/04/2017 | CN 106795601 A | 31/05/2017 |
| | | CN 106795601 B | 28/09/2018 |
| | | EP 3159423 A1 | 26/04/2017 |
| | | JP 5846343 B1 | 04/12/2015 |
| | | JP WO2016-035236 A1 | 27/04/2017 |
| | | KR 10-1941065 B1 | 22/01/2019 |
| | | TW 201610183 A | 16/03/2016 |
| | | TW I560282 B | 01/12/2016 |
| | | US 2017-0283923 A1 | 05/10/2017 |
| | | WO 2016-035236 A1 | 10/03/2016 |
| WO 2018-043285 A1 | 08/03/2018 | JP 6278172 B1 | 26/01/2018 |
| | | JP WO2018-043285 A1 | 06/09/2018 |

Form PCT/ISA/210 (patent family annex) (January 2015)